# EUROPÄISCHE PATENTANMELDUNG

(11) **EP 0 609 869 A1**
(43) Veröffentlichungstag der Anmeldung: **10.08.1994**
(21) Anmeldenummer: 94101575.2
(22) Anmeldetag: 02.02.1994
(51) Int. Cl.: H04L 12/56, H04Q 11/04, H04Q 3/68, H04L 29/14

(54) **Fehlertolerantes adaptives Verfahren zur Nachrichtenvermittlung**

(30) Priorität: 04.02.1993 DE 4303233
(71) Anmelder: SIEMENS AKTIENGESELLSCHAFT, D-80333 München (DE)
(72) Erfinder: Hofestädt, Holm, Dr., D-38173 Sickte (DE); Reyzl, Erwin, D-81669 München (DE)

(57) **Zusammenfassung**

Es wird ein Verfahren zum lokal adaptiven Routing beschrieben, das fehlertolerant gegenüber dem Ausfall von Netzwerkverbindungen ist. Bei diesem Verfahren werden nur Ausgänge mit intakten Verbindungen zum adaptiven Routing zugelassen. Dabei wird der Ausfall einer Verbindung durch spezielle Signale (Fehler-Flags) angezeigt. Zur Detektion ausgefallener Verbindungen werden Token über alle Verbindungen gesendet, deren Ausbleiben den Ausfall einer Verbindung anzeigt.

## Beschreibung

Ein häufig auftretendes Problem in Verbindungsnetzwerken, die aus Vermittlungselementen (Router oder auch Schalter genannt) aufgebaut sind und eine gewisse Anzahl von Eingängen (Sender) mit Ausgängen (Empfänger) verbinden, besteht in dem möglichen Auftreten unterbrochener Verbindungen innerhalb des Verbindungsnetzes, die durch z.B. wackelnde Stecker oder zerstörte Leitungen verursacht werden. Als Folge solcher Unterbrechungen wird die Übermittlung von Nachrichten über derartige unterbrochene Verbindungen teilweise oder vollständig unmöglich.

Bekannte Techniken, die Auswirkungen solcher Verbindungsausfälle zu beherrschen und die Funktion des Verbindungsnetzes auch im Fall von Verbindungsausfällen zu gewährleisten beruhen im wesentlichen auf zwei Ansätzen:
a) Durch Vervielfachung des Netzwerkes (Replikation) und Vielfachübertragung einer Nachricht in Form mehrerer Kopien über redundante Verbindungswege wird erreicht, daß bei einem Verbindungsausfall in einem vervielfachten Netzwerk wenigstens eine Kopie einer zu übertragenden Nachricht den Empfänger erreicht. Diese Technik ist mit vervielfachten Kosten verbunden und bringt im ausfallfreien Zustand keinen Leistungsgewinn. Daneben ist eine besondere Behandlung mehrfach übermittelter Kopien einer Nachricht erforderlich, wenn eine Nachricht einen Empfänger nur einmal erreichen soll.
b) Normalerweise bestehen in den betrachteten Verbindungsnetzwerken redundante Verbindungswege, die gleichermaßen eine Verbindung zwischen einem Sender und einem Empfänger ermöglichen, und die im ausfallfreien Zustand der Leistungssteigerung dienen. Bekannte Techniken, die im ausfallfreien Betrieb für ein bestimmtes Sender-Empfänger-Paar stets einen bestimmten Verbindungsweg benutzen (sogenanntes deterministisches Routing), bedürfen im Falle einer Verbindungsunterbrechung einer Netzwerk-Rekonfiguration, was besonders im Falle großer Netze einen beträchtlichen Aufwand hinsichtlich der hierfür benötigten Software bedeutet.

Der vorliegenden Patentanmeldung liegt daher die Aufgabe zugrunde, ein Verfahren zur Vermittlung von Nachrichten in Verbindungsnetzwerken mir redundanten Verbindungswegen anzugeben, mit dem eine optimale Ausnutzung redundanter Verbindungen sowohl zur Leistungssteigerung als auch zur Fehlertoleranz gegen Verbindungsausfall erreicht wird, und welches ohne Netzwerkvervielfachung oder Netzwerk-Rekonfiguration auskommt. Diese Aufgabe wird erfindungsgemäß durch ein Verfahren zur Vermittlung von Nachrichten mit Merkmalen nach Anspruch 1 gelöst.

Bei diesem Verfahren werden nur Ausgänge mit intakten Verbindungen zum adaptiven Routing zugelassen. Dabei wird der Ausfall einer Verbindung vorzugsweise durch spezielle Signale (Fehler-Flags) angezeigt. Zur Detektion ausgefallener Verbindungen werden vorzugsweise Token über alle Verbindungen gesendet, wobei z.B. deren Ausbleiben den Ausfall einer Verbindung anzeigt.

Bei einem bevorzugten Ausführungsbeispiel der Erfindung wird an Vermittlungselementen mit mehreren Ausgängen für mindestens eine Zieladresse jeder solchen Zieladresse eine Gruppe dieser Ausgänge zugeordnet. Innerhalb dieser Gruppe wird ein freier Ausgang gesucht, dessen zugehörige Verbindung nicht unterbrochen ist; über diesen Ausgang wird die Nachricht weitergeleitet. Gibt es innerhalb dieser Gruppe keinen solchen Ausgang, wird die Nachricht verzögert, bis ein Ausgang mit nicht unterbrochener Verbindung frei ist.

Bei einem weiteren bevorzugten Ausführungsbeispiel der Erfindung wird an Vermittlungselementen mit mehreren Ausgängen für mindestens eine Zieladresse wird jeder solchen Zieladresse eine Gruppe dieser Ausgänge zugeordnet. Innerhalb dieser Gruppe wird ein freier Ausgang, dessen zugehörige Verbindung nicht unterbrochen ist, zufällig ausgewählt; über diesen Ausgang wird die Nachricht weitergeleitet. Die Nachricht wird verzögert, solange dieser Ausgang nicht frei ist.

Vorteilhafte Weiterbildungen ergeben sich aus den Unteransprüchen.

Bei einem bevorzugten Ausführungsbeispiel der Erfindung umfaßt die Gruppe von Ausgängen für jede Zieladresse alle die Ausgänge, über welche diese Zieladresse erreichbar ist.

Bei einem weiteren bevorzugten Ausführungsbeispiel der Erfindung ist jeder Zieladresse eine Teilmenge aller Zieladressen und jeder dieser Teilmengen eine Gruppe von Ausgängen oder ein einzelner Ausgang zugeordnet.

Bei einem weiteren bevorzugten Ausführungsbeispiel der Erfindung wird eine unterbrochene Verbindung durch einen bestimmten Wert eines hierfür vorgesehenen ersten Signals (Fehler-Flag) angezeigt. Zur Detektion von Verbindungsausfällen werden im Zusammenhang mit einem dieser Verfahren vorzugsweise spezielle zweite Signale (Token) über alle Verbindungen gesendet, und ein Ausbleiben solcher Signale oder das Eintreffen unerwarteter Signalfolgen zeigt den Ausfall einer oder mehrerer Verbindungen an. In diesem Fall wird das entsprechende Fehler-Flag gesetzt.

Figur 1 zeigt ein einfaches Beispiel eines Verbindungsnetzwerks, das aus Vermittlungselementen mit redundanten Verbindungswegen aufgebaut ist.

Figur 2 zeigt ein Verbindungsnetzwerk gem. Figur 1, bei dem eine Verbindung unterbrochen ist.

Im folgenden wird die Erfindung anhand eines bevorzugten Ausführungsbeispiels und mit Hilfe der Figuren beschrieben.

Aus der deutschen Patentanmeldung 91106338.6 ist ein Verfahren zur Vermittlung von Nachrichten bekannt, bei dem ein lokal adaptiver Routing-Algorithmus verwendet wird, welcher jeder Zieladresse an Vermittlungselementen mit mehreren Ausgängen für diese Zieladresse eine Gruppe dieser Ausgänge zuordnet, und innerhalb dieser Gruppe einen freien Ausgang sucht, über den die Nachricht weitergeleitet wird, und die Nachricht nur dann verzögert wird, wenn innerhalb dieser Gruppe kein Ausgang frei ist. Durch diese Vorgehensweise werden die Nachrichten nicht ausschließlich über einen durch die Zieladresse deterministisch vorgegebenen Vermittlungselementausgang (bzw. Verbindungsweg) weitergeleitet, sondern es werden zur Vermittlung einer Nachricht alle zur Vermittlung dieser Nachricht geeigneten Ausgänge eines Vermittlungselementes in Betracht gezogen und innerhalb dieser Gruppe von Ausgängen ein freier Ausgang gesucht, über den die Nachricht weitergeleitet wird. Hierdurch wird die vorhandene Netzwerkredundanz unter Erhaltung der Deadlock-Freiheit optimal ausgenutzt.

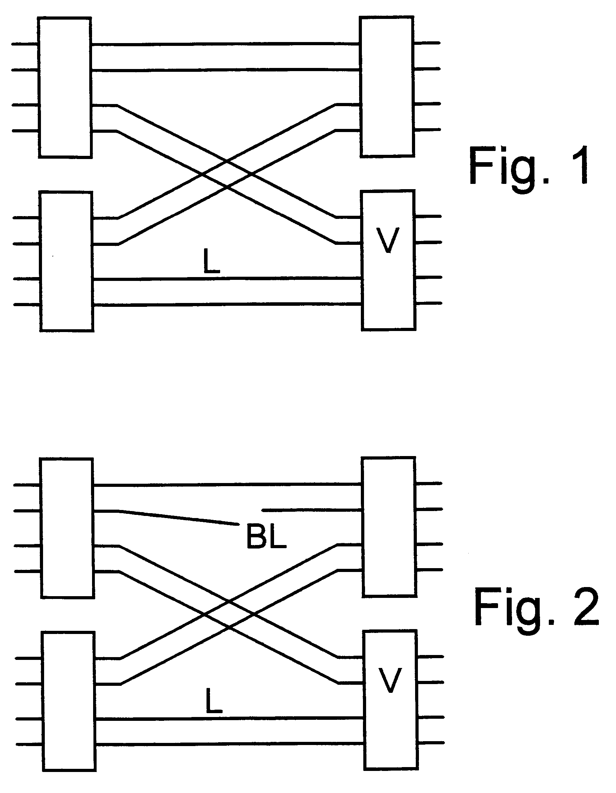

Figur 1 zeit ein einfaches aber typisches Netzwerk, wie es im Zusammenhang mit einem derartigen Verfahren verwendet wird. Eine Menge von Sendern und Empfängern ist über Vermittlungselemente V und Verbindungen L miteinander verbunden. Dabei ist die Zahl der Verbindungen L im typischen Anwendungsfall bedeutend geringer als die Zahl aller möglichen Sender-Empfänger-Paare. Redundante Verbindungen zwischen den Vermittlungselementen V steigern die Übertragungsleistung des Netzwerkes. Figur 2 zeigt ein derartiges Netzwerk, bei dem eine Verbindung BL unterbrochen ist. In Figur 2 steht aber noch eine zweite - mit der unterbrochenen Verbindung gleichwertige - Verbindung bereit, die in bezug auf die unterbrochene Verbindung redundant ist. Im allgemeinen Fall komplexerer Netzwerke (Clos-Netzwerke) gibt es typischerweise zu jedem Paar direkt verbundener Vermittlungselemente eine Gruppe redundanter Verbindungen, deren Zahl i.a. größer ist als 2, so daß auch nach dem Ausfall einer oder mehrerer dieser Verbindungen immer noch eine Restgruppe intakter, in bezug aufeinander redundanter Verbindungen vorhanden ist. Diese Redundanz ist zwar ebenso wie die erwähnte Mehrfachauslegung mit erhöhten Kosten verbunden; sie dient aber auch im ausfallfreien Zustand einer Leistungssteigerung, wenn man das in der deutschen Patentanmeldung 91106338.6 beschriebene Verfahren einsetzt.

Dabei werden diejenigen Ausgänge eines Vermittlungselementes, die bezüglich der Vermittlung vollständig äquivalent zueinander sind, jeweils zu einer Gruppe zusammengefaßt. Für die Weiterleitung einer Nachricht (z.B. eines Datenpaketes) wird ein freier, d.h. noch nicht belegter Ausgang dieser Gruppe ausgewählt, falls solch eine freier Ausgang in dieser Gruppe existiert. Ist kein Ausgang frei, wird die zu übertragende Nachricht verzögert (z.B. in einem Speicher des Vermittlungselementes zwischengespeichert, in eine Warteschlange eingereiht, etc.) bis ein freier Ausgang für die Übermittlung der Nachricht zur Verfügung steht. Im Beispiel der Figur 1 bestehen die Gruppen der äquivalenten Verbindungen jeweils aus zwei Verbindungen zwischen zwei direkt verbundenen Vermittlungselementen. Vorzugsweise ist zu jedem Ausgang eines Vermittlungselementes ein Signal vorgesehen, das die Werte 'Busy' bzw. 'Idle' annehmen kann, je nachdem, ob der betreffende Ausgang frei ('Idle') oder belegt ('Busy') ist. Dieses Signal wird auch als Busy-Flag bezeichnet. Das Busy-Flag ist gesetzt, d.h. befindet sich im Zustand 'Busy', wenn eine gerade Nachricht eine Nachricht über diesen Ausgang übertragen wird; andernfalls befindet es sich im Zustand 'Idle', d.h. der Ausgang ist verfügbar.

Erfindungsgemäß wird dieses Verfahren nun in der Weise erweitert, daß die Gruppe der äquivalenten Verbindungen auf die nicht unterbrochenen Verbindungen in dieser Gruppe eingeschränkt wird. Hierzu wird vorzugsweise zu jedem Ausgang eines Vermittlungselementes neben dem Busy-Flag ein weiteres Signal vorgesehen, welches anzeigt, ob die zu diesem Ausgang gehörende Verbindung unterbrochen (ausgefallen) ist oder nicht. Ein solches Fehler-Flag ist im ausfallfreien Zustand nicht gesetzt (d.h. es hat z.B. den Wert 'OK'). Ist eine Verbindung ausgefallen, ist das Fehler-Flag dagegen gesetzt (d.h. es hat z.B. den Wert 'Error').

Das erfindungsgemäße Verfahren zur Vermittlung von Nachrichten (Routing Verfahren) berücksichtigt in dieser Ausführungsform also sowohl das Busy-Flag als auch das FehlerFlag. Dabei wird aus der Gruppe aller äquivalenten Verbindungen (d.h. aller äquivalenten Ausgänge) eine ausgewählt, deren Flags die Werte 'Idle' und 'OK', also eine nicht unterbrochene, frei Verbindung anzeigen. Ist zu einem Zeitpunkt kein solcher Ausgang (d.h. keine solche Verbindung) vorhanden, so wird die Nachricht verzögert, bis ein Ausgang frei geworden ist. Zur Verzögerung wird die Nachricht vorzugsweise in eine Warteschlange eingereiht, die einem Ausgang der Gruppe zugeordnet ist, dessen Fehler-Flag den Wert 'OK' hat. Erst wenn keine derartigen Ausgänge in der Gruppe gefunden werden können, d.h. wenn alle Fehler-Flags der Gruppe den Ausfall der ihnen entsprechenden Verbindung anzeigen, wären alle äquivalenten Verbindungen unterbrochen und das Netz in seiner Funktion beeinträchtigt.

Zur Detektion unterbrochener Verbindungen wird vorzugsweise ein Ausfallerkennungsmechanismus verwendet, bei dem spezielle Signale, sogenannte Token, über alle Verbindungen des Netzwerkes gesendet werden. Das Ausbleiben dieser Token oder das Eintreffen unerwarteter Signalfolgen zeigt dann an, daß eine Verbindung nicht funktionsfähig ist. In diesem Fall wird das entsprechende Fehler-Flag dieser Verbindung gesetzt, so daß das erfindungsgemäße Verfahren zur Nachrichtenvermittlung (Routing) diesen Fehlerzustand erkennen und wie oben beschrieben berücksichtigen kann.

## Patentansprüche

1. Verfahren zur Vermittlung von Nachrichten in einem Netzwerk aus Vermittlungselementen, in dem es Vermittlungselemente gibt, die derart in das Netz eingebunden sind, daß es Zieladressen gibt, die über mehrere Ausgänge solcher Vermittlungselemente erreichbar sind, mit folgenden Merkmalen:
- an Vermittlungselementen mit mehreren Ausgängen für mindestens eine Zieladresse wird jeder solchen Zieladresse eine Gruppe dieser Ausgänge zugeordnet;
- innerhalb dieser Gruppe wird ein freier Ausgang gesucht, dessen zugehörige Verbindung nicht unterbrochen ist; über diesen Ausgang wird die Nachricht weitergeleitet;
- gibt es innerhalb dieser Gruppe keinen solchen Ausgang, wird die Nachricht verzögert, bis ein Ausgang mit nicht unterbrochener Verbindung frei ist.

2. Verfahren zur Vermittlung von Nachrichten in einem Netzwerk aus Vermittlungselementen, in dem es Vermittlungselemente gibt, die derart in das Netz eingebunden sind, daß es Zieladressen gibt, die über mehrere Ausgänge solcher Vermittlungselemente erreichbar sind, mit folgenden Merkmalen:
- an Vermittlungselementen mit mehreren Ausgängen für mindestens eine Zieladresse wird jeder solchen Zieladresse eine Gruppe dieser Ausgänge zugeordnet;
- innerhalb dieser Gruppe wird ein freier Ausgang, dessen zugehörige Verbindung nicht unterbrochen ist, zufällig ausgewählt; über diesen Ausgang wird die Nachricht weitergeleitet;
- die Nachricht wird verzögert, solange dieser Ausgang nicht frei ist.

3. Verfahren nach einem der vorhergehenden Ansprüche, bei dem die Gruppe von Ausgängen für jede Zieladresse alle Ausgänge umfaßt, über welche diese Zieladresse erreichbar ist.

4. Verfahren nach einem der vorhergehenden Ansprüche, bei dem jeder Zieladresse eine Teilmenge aller Zieladressen und jeder dieser Teilmengen eine Gruppe von Ausgängen oder ein einzelner Ausgang zugeordnet ist.

5. Verfahren nach einem der vorhergehenden Ansprüche, bei dem eine unterbrochene Verbindung durch einen bestimmten Wert eines hierfür vorgesehenen ersten Signals (Fehler-Flag) angezeigt wird.

6. Verfahren nach einem der vorhergehenden Ansprüche, bei dem zur Detektion von Verbindungsausfällen spezielle zweite Signale (Token) über alle Verbindungen gesendet werden und bei dem das Ausbleiben solcher zweiten Signale oder das Eintreffen unerwarteter Signalfolgen den Ausfall einer oder mehrerer Verbindungen anzeigt.
